# EUROPÄISCHE PATENTSCHRIFT

(11) **EP 1 387 121 B1**
(45) Veröffentlichungstag und Bekanntmachung des Hinweises auf die Patenterteilung: **24.05.2006**
(21) Anmeldenummer: 03014999.1
(22) Anmeldetag: 02.07.2003
(51) Int. Cl.: F16P 3/14

(54) **Schutzeinrichtung für Maschinen, wie Biegepressen, Schneidemaschinen, Stanzmaschinen oder dergleichen**
Protective device for machines such as bending presses, cutting machines, punching machines or the like
Dispositif de protection pour machines telles que presses-plieuses, découpeuses, machines à estamper ou analogues

(30) Priorität: 31.07.2002 DE 10234796; 05.10.2002 DE 10246609
(43) Veröffentlichungstag der Anmeldung: 04.02.2004
(73) Patentinhaber: Fiessler Elektronik GmbH & Co. KG, 73734 Esslingen (DE)
(72) Erfinder: Fiessler, Lutz, Dr. Ing., 73773 Aichwald (DE)
(74) Vertreter: Vetter, Hans

(56) Entgegenhaltungen:
- EP-A- 0 146 460
- EP-B- 0 264 349
- WO-A-97/25568
- DE-A- 10 123 562
- DE-A- 19 717 299
- DE-B- 2 750 234
- US-A- 5 579 884

## Beschreibung

Die Erfindung betrifft eine Schutzeinrichtung für Maschinen, wie Biegepressen, Schneidemaschinen, Stanzmaschinen oder dergleichen, bei denen ein erstes Maschinenteil Arbeitsbewegungen gegen ein zweites Maschinenteil ausführt, mit einer am ersten Maschinenteil mittels einer Halteeinrichtung angebrachten Lichtschrankenanordnung, insbesondere Laser-Lichtschrankenanordnung, die wenigstens zwei in der Arbeitsbewegungsbahn des ersten Maschinenteils hintereinander angeordnete Lichtschranken besitzt, deren Lichtstrahlen senkrecht zur Arbeitsbewegungsrichtung verlaufen und in einer einstellbaren Sicherheitsposition Sicherheitsabstände zu diesem Maschinenteil in Richtung des anderen Maschinenteils aufweisen, und mit einer bei Lichtstrahl-Unterbrechung die Arbeitsbewegung stoppenden Blockiereinrichtung.

Derartige Schutzeinrichtungen sind beispielsweise aus der DE 2750234 B1, der DE 19717299 A1, der WO 97/25568, der EP 0264349 B1 oder der EP 0146460 A2 bekannt und dienen dazu, in erster Linie die Bedienungsperson zu schützen und zu verhindern, dass beispielsweise eine Hand zwischen den beiden Maschinenteilen bzw. Werkzeugen eingeklemmt oder verletzt wird. Selbstverständlich kann die Lichtschrankenanordnung auch verhindern, dass durch das sich bewegende erste Maschinenteil unabsichtlich zwischen ihm und dem zweiten Maschinenteil gelangte Gegenstände beschädigt oder zerstört werden, wobei auch eine Selbstzerstörung oder -beschädigung verhindert wird. Bei den bekannten Schutzeinrichtungen würde am En-de der Schließbewegung das erste Maschinenteil kurz vor Erreichen des zu bearbeitenden Werkstücks zum Stehen kommen, da der Laserstrahl unterbrochen würde, wenn sich das erste Maschinenteil bis auf den Sicherheitsabstand dem Werkstück genähert hat. Um dies zu verhindern, wird bei den bekannten Schutzeinrichtungen die Lichtschrankenanordnung gegen Ende der Schließbewegung deaktiviert. Dies kann nur deshalb in Kauf genommen werden, da gleichzeitig von der gefährlichen Eilgeschwindigkeit auf eine ungefährlichere Schleichgeschwindigkeit umgeschaltet wird. Bei Maschinen, die keine Geschwindigkeitsumschaltung durchführen, ist eine solche Deaktivierung nicht zulässig, und die Schutzeinrichtung muss während der gesamten Schließbewegung aktiv bleiben. Im Dokument US 5579884 wird eine Schutzeinrichtung gemäß dem Oberbegriff des Anspruchs 1 offenbart.

Eine Aufgabe der vorliegenden Erfindung besteht somit darin, eine Schutzeinrichtung für Maschinen zu schaffen, bei denen das erste Maschinenteil seine Schließbewegung gegen das zweite Maschinenteil mit unveränderter Geschwindigkeit ausführt, wobei die Schutzeinrichtung während der gesamten Schließbewegung aktiv bleiben soll.

Diese Aufgabe wird erfindungsgemäß durch eine Deaktivierungsvorrichtung zur Deaktivierung der Lichtschranken nacheinander jeweils vor einer Unterbrechung durch das zu bearbeitende Werkstück oder durch das zweite Maschinenteil gelöst.

Die Vorteile der Erfindung bestehen insbesondere darin, dass bei der Annäherung des ersten Maschinenteils an das zweite Maschinenteil die Lichtschranken sukzessive deaktiviert werden, das heißt jeweils kurz vor ihrer ansonsten erfolgenden Unterbrechung durch das zu bearbeitende Werkstück oder durch das zweite Maschinenteil. Es ist dadurch in jeder Phase des Bearbeitungsvorgangs eine größtmögliche Sicherheit gegeben, so dass eine Umschaltung der Hubgeschwindigkeit auf einen geringeren Wert vor dem Aufeinandertreffen der beiden Maschinenteile nicht erforderlich ist. Dies führt zu einer einfacheren Steuerung, zu schnelleren Arbeitsbewegungen bzw. zu einem schnelleren Arbeitstakt.

Durch die in den Unteransprüchen aufgeführten Maßnahmen sind vorteilhafte Weiterbildungen und Verbesserungen der im Anspruch 1 angegebenen Schutzeinrichtung möglich.

Einen zusätzlichen Schutz bildet eine oder mehrere vorgelagerte weitere Lichtschrankenanordnungen, die seitlich versetzt zu der ersten am ersten Maschinenteil angeordneten Lichtschrankenanordnung angeordnet sind. Diese wenigstens eine zusätzliche Lichtschrankenanordnung verhindert, dass Finger noch kurz vor dem Ende der Schließbewegung in den Gefahrenbereich eindringen können, bevor die Schließbewegung angehalten wird. Für die Bearbeitung von speziellen Werkstückgeometrien kann diese weitere Lichtschrankenanordnung mit Hilfe zusätzlicher Abschaltmittel deaktiviert werden. Damit die Abwahl nicht dauernd erfolgt und eventuell die Wiedereinschaltung vergessen wird, sind zweckmäßigerweise automatische Einschaltmittel zur Aktivierung dieser deaktivierten weiteren Lichtschrankenanordnung vorgesehen, die insbesondere durch die Öffnungsbewegung des ersten Maschinenteils oder durch Endschalter auslösbar sind.

Der Sicherheitsabstand in der Arbeitsbewegungsrichtung zwischen dem ersten Maschinenteil und der benachbarten Lichtschranke sowie zwischen den Lichtschranken wenigstens der ersten Lichtschrankenanordnung wird in Gebrauch zweckmäßigerweise kleiner als der Durchmesser des kleinsten zwischen den Maschinenteilen bewegbaren Körperteils einer Bedienungsperson gewählt, also insbesondere kleiner als der Durchmesser eines kleinen Fingers. Der Sicherheitsabstand wird also beispielsweise zwischen 6 und 14 mm eingestellt.

Zur Deaktivierung der wenigstens einen Lichtschrankenanordnung ist in einer vorteilhaften Ausgestaltung eine Kurven-steuerung mit Endschalter mit der Deaktivierungsvorrichtung verbunden. Alternativ hierzu kann zur Deaktivierung auch ein Wegmesssystem vorgesehen sein. Vorzugsweise ist dabei dem Wegmesssystem eine Lerneinrichtung zugeordnet, durch die die Deaktivierungspositionen durch Unterbrechung wenigstens der untersten Lichtschranke bei einem Lernhub einspeicherbar oder einstellbar ist. Schließlich besteht eine alternative Möglichkeit zur Deaktivierung auch darin, eine zeitsteuereinrichtung mit der Deaktivierungsvorrichtung zu verbinden.

Ein Ausführungsbeispiel der Erfindung ist in der Zeichnung dargestellt und in der nachfolgenden Beschreibung näher erläutert. Es zeigen:
- Figur 1: eine Längsseitenansicht einer mit der erfindungsgemäßen Schutzeinrichtung versehenen Abkantpresse,
- Figur 2: eine Querseitenansicht der in Figur 1 dargestellten Abkantpresse in vereinfachter Darstellung und
- Figur 3: ein schematisches Schaltbild zur Erläuterung der sequentiellen Deaktivierung der Lichtschranken.

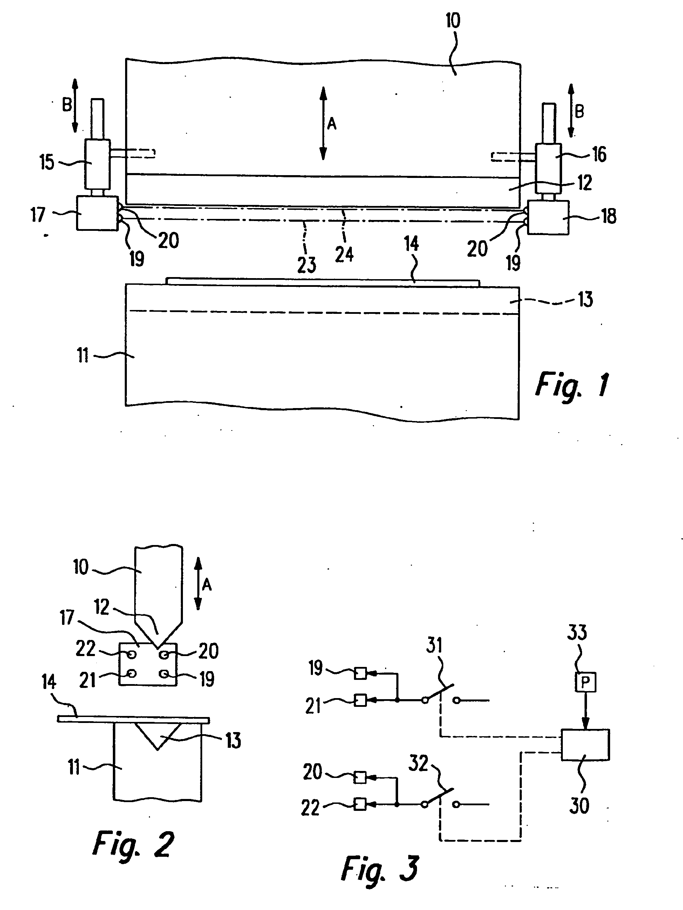

Die in den Figuren 1 und 2 dargestellte Abkantpresse besteht im Wesentlichen aus einem als Oberwerkzeug 10 ausgebildeten ersten Maschinenteil, das gegen ein feststehendes, als Unterwerkzeug 11 ausgebildetes zweites Maschinenteil bewegbar ist. Die gegensinnige Arbeitsbewegungsrichtung A ist mit einem Doppelpfeil gekennzeichnet. Selbstverständlich kann bei einer alternativen Ausführung auch das Oberwerkzeug feststehend und das Unterwerkzeug bewegbar ausgebildet sein. Das plattenartige, langgestreckte Oberwerkzeug 10 besitzt einen Arbeitsbereich 12 mit keilförmigem Querschnitt, während das Unterwerkzeug 11 eine entsprechende keilförmige Rinne 13 besitzt, in die der Arbeitsbereich 12 bei der Arbeitsbewegung eingreift und dadurch das auf dem Unterwerkzeug 11 liegende, zu bearbeitende Blech 14 biegt bzw. abkantet.

Die übrigen Bereiche der an sich bekannten Abkantpresse sind zur Vereinfachung nicht dargestellt. Die Querschnittsgestalt des Arbeitsbereichs 12 und der Rinne 13 kann selbstverständlich variieren.

Jeweils an den einander entgegengesetzten Schmalseiten des Oberwerkzeugs 10 sind Führungen 15, 16 am Oberwerkzeug 10 befestigt, beispielsweise angeschraubt. Die Befestigung kann selbstverständlich prinzipiell auch indirekt erfolgen, das heißt, die Führungen 15, 16 sind dann an einer Halterung befestigt, die über eine nicht dargestellte Halterung für das Oberwerkzeug 10 mit dieser verbunden ist.

In den Führungen 15, 16 sind Halterungen 17, 18 für vier Lichtschranken 19 - 22 in einer vertikalen Einstellbewegung bewegbar, deren Richtung durch Doppelpfeile B dargestellt ist und die der Arbeitsbewegungsrichtung A entspricht. Jede der Lichtschranken 19 - 22 besteht in an sich bekannter Weise aus einem Laser-Sender und einem Laser-Empfänger, wobei die Laser-Sender an der einen Halterung 17 und die Laser-Empfänger an der anderen Halterung 18 angeordnet sind. Es ist prinzipiell auch möglich, die Zahl der Sender dadurch zu reduzieren, dass der Sendestrahl des Senders durch einen Strahlteiler in mehrere Sendelichtstrahlen aufgeteilt wird. Weiterhin ist es auch möglich, den Sendestrahl parallel aufzuweiten. Weitere Möglichkeiten, die Zahl der Sender und die Zahl der Empfänger einzusparen, sind in der eingangs angegebenen DE 19717299 A1 beschrieben. Anstelle von Laser-Lichtstrahlen können selbstverständlich auch andere bekannte Arten von Lichtstrahlen verwendet werden.

Die Lichtschranken 19, 20 bilden eine erste Lichtschrankenanordnung, die unmittelbar unterhalb des Arbeitsbereichs 12 in der Arbeitsbewegungsbahn desselben angeordnet ist. Die beiden anderen Lichtschranken 21, 22 bilden eine zweite Lichtschrankenanordnung, die seitlich versetzt in Richtung zur Bedienungsperson zur ersten Lichtschrankenanordnung angeordnet ist. Dabei liegen die Lichtschranken 19, 21 in einer unteren horizontalen Ebene und die Lichtschranken 20, 22 in einer oberen horizontalen Ebene. Die erste Lichtschrankenanordnung 19, 20 kann selbstverständlich noch weitere in einer vertikalen Reihe angeordnete Lichtschranken besitzen. Dies gilt auch für die zweite Lichtschrankenanordnung 21, 22, die ebenfalls mehr oder weniger Lichtschranken aufweisen kann. Weiterhin ist es möglich, anstelle einer seitlich versetzten vorgelagerten Lichtschrankenanordnung auch mehrere solcher weiteren Lichtschrankenanordnungen vorzusehen, die in abgestuften Abständen vorgelagert sind.

Die Schutzwirkung der beschriebenen Schutzeinrichtung besteht darin, dass die Schließbewegung zwischen Oberwerkzeug 10 und Unterwerkzeug 11 abrupt gestoppt wird, wenn einer der LaserStrahlen der Lichtschranken 19 - 22 unterbrochen wird, wenn also ein Gegenstand in die Bewegungsbahn gelangt. Da derartige Abkantpressen oder ähnliche Maschinen üblicherweise handbedient sind, besteht vor allem die Gefahr, dass die Hand oder der Arm einer Bedienungsperson in die Arbeitsbewegungsbahn gelangt, was zu einem Einklemmen oder Abtrennen durch die Schließbewegung führen könnte. Der Sicherheitsabstand zwischen den Laserstrahlen in der Arbeitsbewegungsrichtung und der der oberen Lichtschranke 20 der ersten Lichtschrankenanordnung zum Arbeitsbereich 12 sollte daher so bemessen sein, dass beispielsweise kein Finger dazwischengeschoben werden kann. Andererseits sollte dieser Sicherheitsabstand so groß sein, dass bei einer Unterbrechung eines Laserstrahls die Schließbewegung noch rechtzeitig vor dem Hindernis abgebremst bzw. gestoppt werden kann. Der Sicherheitsabstand wird daher beispielsweise zwischen 6 und 14 mm eingestellt.

Die Justierung der Lichtschrankenanordnungen bzw. der Halterungen 17, 18 am Oberwerkzeug durch Verschiebung in den Führungen 15, 16 kann beispielsweise gemäß der eingangs angegebenen DE 19717299 A1 erfolgen. Es kann auch eine automatisch positionierende Vorrichtung gemäß der DE 10123562 A1 vorgesehen sein.

Bewegt sich das Oberwerkzeug 10 gegen das Unterwerkzeug 11, so würden am Ende der Schließbewegung zunächst die Lichtschranken 19, 21 der unteren Ebene durch das Werkstück 14 unterbrochen werden, was zu einem sofortigen Bewegungsstopp führen würde, so dass der gewünschte Arbeitsvorgang nicht ausgeführt werden könnte. Mit Hilfe einer Deaktivierungsvorrichtung 30 wird dies verhindert. Diese Deaktivierungsvorrichtung 30 deaktiviert zunächst die Lichtschranken 19, 21 mit Hilfe einer Schalteinrichtung 31 kurz bevor eine Unterbrechung durch das Werkstück 14 oder durch das Unterwerkzeug 11 erfolgen würde. Kurze Zeit später werden auch die Lichtschranken 20, 22 der oberen Ebene durch die Deaktivierungsvorrichtung 30 mit Hilfe einer weiteren Schalteinrichtung 32 deaktiviert, wiederum kurz bevor eine Unterbrechung durch das Werkstück 14 oder das Unterwerkzeug 11 erfolgen würde. Enthält die vertikale Reihe von Lichtschranken noch weitere Lichtschranken, so werden auch diese sequentiell deaktiviert, beginnend mit der untersten. Auf diese Weise entfaltet die Schutzeinrichtung während der gesamten Schließbewegung ihre Schutzwirkung, und es ist daher nicht erforderlich, gemäß üblicher Praxis in einen Schleichgang bei der Schließbewegung umzuschalten. Bei der Rückwärtsbewegung erfolgt in umgekehrter Reihe wieder die Aktivierung der Lichtschranken, was prinzipiell auch in der oberen Endposition vor dem nächsten Arbeitsgang erfolgen könnte.

In dem in Figur 3 dargestellten Ausführungsbeispiel wird die Deaktivierungsvorrichtung 30 durch ein Wegmesssystem 33 gesteuert, das in den Figuren 1 und 2 zur Vereinfachung nicht dargestellt ist. Durch dieses Wegmesssystem können diejenigen Positionen erfasst werden, zu denen die Lichtschranken jeweils abgeschaltet werden. Dabei kann die Deaktivierungsvorrichtung 30 oder eine gesonderte Vorrichtung auch eine Lernvorrichtung enthalten, mit deren Hilfe diejenigen Positionen eingespeichert werden, bei denen eine Strahlunterbrechung stattfinden würde. Die Deaktivierungspositionen werden dann automatisch oder manuell mit geringem Abstand vor diesen Unterbrechungspositionen gewählt. Da der Abstand zwischen den Lichtschranken untereinander fest ist, reicht dabei die Erfassung der Position der untersten Lichtschrankenebene.

Die Steuerung der Deaktivierungsvorrichtung 30 kann alternativ auch durch eine Kurvensteuerung mit Endschaltern oder durch eine zeitsynchrone Steuerung erfolgen.

Die Lichtschranken der zusätzlichen Lichtschrankenanordnung 21, 22, die zur Bedienungsperson hin versetzt angeordnet sind, dienen zur zusätzlichen Sicherheit. Würde beispielsweise ein Finger einer Bedienungsperson seitlich über das Unterwerkzeug 11 in die Rinne 13 eingreifen, während das zu bearbeitende Werkstück 14 an dieser Stelle zurückgezogen ist oder eine Öffnung besitzt, so würden die übereinanderliegenden Lichtschranken 19, 20 eine Verletzung nicht verhindern können, da sie neben dem Finger in die Rinne 13 eingreifen bzw. beim Eintreten in diese Rinne bereits abgeschaltet sind. Eine solche Verletzung kann durch die zusätzlichen Lichtschranken 21, 22, insbesondere durch die Lichtschranke 21, verhindert werden.

Für die Bearbeitung von speziellen Werkstückgeometrien können die Lichtschranken 21, 22 der zweiten Lichtschrankenanordnung mit Hilfe einer nicht dargestellten zusätzlichen Abschalteinrichtung deaktiviert werden. Damit die Abwahl jedoch nicht dauernd erfolgt bzw. damit nicht vergessen wird, diese Lichtschranken wieder zu aktivieren, kann die Abwahl nach jeder Schließbewegung, zum Beispiel durch die Öffnungsbewegung oder durch Endschalter, wieder automatisch rückgängig gemacht werden. Zur Erhöhung der Sicherheit könnte in diesem Spezialfall einer Abschaltung der zusätzlichen Lichtschranken 21, 22 die Umschaltung in einen langsameren Schleichgang erfolgen kurz bevor die Lichtschranken im Gefahrenbereich ausgeblendet werden.

Die beschriebene Schutzeinrichtung ist selbstverständlich nicht auf Abkantpressen, Biegepressen, Schneidemaschinen, Stanzmaschinen oder dergleichen beschränkt, sondern kann überall dort eingesetzt werden, wo zwei Maschinenteile Arbeitsbewegungen gegeneinander ausführen, so dass dazwischen sich befindliche Körperteile verletzt werden können. Darüber hinaus wird selbstverständlich auch ein Schutz der Maschine oder der Maschinenteile durch die Sicherheitsabschaltung erreicht, wenn andere Gegenstände in die Bewegungsbahn gelangen, die diese Maschinenteile oder Werkzeuge beschädigen könnten.

Die erfindungsgemäße Schutzeinrichtung kann beispielsweise auch für sich schließende Türen oder Klappen oder Schieber, Hobelmaschinen oder dergleichen eingesetzt werden.

Die Lichtschranken 19 bis 22 der Lichtschrankenanordnungen oder weiterer Lichtschrankenanordnungen können in vorteilhafter Weise auch dadurch realisiert werden, dass an einer Halterung, beispielsweise der Halterung 17 eine Lichtquelle als einziger Lichtsender angeordnet ist, dessen Licht durch eine Optik in ein paralleles Lichtbündel umgesetzt zur gegenüberliegenden Halterung 18 gelenkt wird. Dort ist eine Blende mit einem dahinterliegenden Umlenkspiegel angeordnet. Die Blende besitzt Durchgangsöffnungen in einer Anordnung, die der Anordnung der Lichtschranken 19 bis 22 oder weiterer Lichtschranken entspricht. Hierdurch werden in Folge der Löcher der Blende einzelne Lichtstrahlen zur Halterung 17 zurück reflektiert, die denen der Lichtschranken 19 bis 22 entsprechen. Mittels eines im Strahlengang schräg gestellten halbdurchlässigen Spiegels werden diese Lichtschranken dann im Bereich der Halterung 17 umgelenkt und zwar zu einer entsprechenden Zahl von Lichtempfängern hin. Dabei kann es sich beispielsweise um eine Empfängermatrix, eine Zeilenkamera, ein Kamerachip, ein Diodenarray oder dergleichen handeln. Durch diese Anordnung kann die Zahl der Lichtsender auf einen reduziert werden, und die gesamte elektrische Anordnung kann auf einer Seite, beispielsweise an der Halterung 17 angeordnet sein. Anstelle eines einzigen Lichtsenders können jedoch auch mehrere Lichtsender vorgesehen sein.

## Patentansprüche

1. Schutzeinrichtung für Maschinen, wie Biegepressen, Schneidemaschinen, Stanzmaschinen oder dergleichen, bei denen ein erstes Maschinenteil (10) Arbeitsbewegungen gegen ein zweites Maschinenteil (11) ausführt, mit einer am ersten Maschinenteil (10) mittels einer Halteeinrichtung (15-18) angebrachten Lichtschrankenanordnung (19-22), insbesondere Laser-Lichtschrankenanordnung, die wenigstens zwei in der Arbeitsbewegungsbahn des ersten Maschinenteils (10) hintereinander angeordnete Lichtschranken (19,20) besitzt, deren Lichtstrahlen senkrecht zur Arbeitsbewegungsrichtung(A) verlaufen und in einer einstellbaren Sicherheitsposition Sicherheitsabstände zu diesem Maschinenteil (10) in Richtung des anderen Maschinenteils (11) aufweisen, und mit einer bei Lichtstrahl-Unterbrechung die Arbeitsbewegung stoppenden Blokkiereinrichtung, **gekennzeichnet durch** eine Deaktivierungsvorrichtung (30) zur Deaktivierung der Lichtschranken (19 - 22) nacheinander jeweils vor einer Unterbrechung **durch** das zu bearbeitende Werkstück (14) oder **durch** das zweite Maschinenteil (11).

2. Schutzeinrichtung nach Anspruch 1, **dadurch gekennzeichnet, dass** wenigstens eine weitere, aus wenigstens einer Lichtschranke (21, 22) bestehende Lichtschrankenanordnung seitlich versetzt zu der ersten am ersten Maschinenteil (10) angeordneten Lichtschrankenanordnung (19, 20) angeordnet ist, wobei die Deaktivierungsvorrichtung (30) zur entsprechenden Deaktivierung der wenigstens einen Lichtschranke (21, 22) der weiteren Lichtschrankenanordnung ausgebildet ist.

3. Schutzeinrichtung nach Anspruch 2, **dadurch gekennzeichnet, dass** zusätzliche Abschaltmittel zur Deaktivierung dieser wenigstens einen weiteren Lichtschrankenanordnung (21, 22) vorgesehen sind.

4. Schutzeinrichtung nach Anspruch 3, **dadurch gekennzeichnet, dass** automatische Einschaltmittel zur Aktivierung der deaktivierten weiteren Lichtschrankenanordnung (21, 22) vorgesehen sind, die insbesondere durch die Öffnungsbewegung des ersten Maschinenteils (10) oder durch Endschalter auslösbar sind.

5. Schutzeinrichtung nach einem der vorhergehenden Ansprüche, **dadurch gekennzeichnet, dass** in Gebrauch der Sicherheitsabstand in der Arbeitsbewegungsrichtung zwischen dem ersten Maschinenteil (10) und der benachbarten Lichtschranke (20) sowie zwischen den Lichtschranken (19, 20) wenigstens der ersten Lichtschrankenanordnung untereinander kleiner als der Durchmesser des kleinsten zwischen den Maschinenteilen (10, 11) bewegbaren Körperteils einer Bedienungsperson ist, insbesondere eines Fingers.

6. Schutzeinrichtung nach einem der vorhergehenden Ansprüche, **dadurch gekennzeichnet, dass** zur Deaktivierung eine Kurvensteuerung mit Endschaltern mit der Deaktivierungsvorrichtung (30) verbunden ist.

7. Schutzeinrichtung nach einem der Ansprüche 1 bis 5, **dadurch gekennzeichnet, dass** zur Deaktivierung ein Wegmesssystem (33) mit der Deaktivierungsvorrichtung (30) verbunden ist.

8. Schutzeinrichtung nach Anspruch 7, **dadurch gekennzeichnet, dass** dem Wegmesssystem (33) eine Lernvorrichtung zugeordnet ist, durch die die Deaktivierungspositionen durch Unterbrechung wenigstens der untersten Lichtschranke (19) bei einem Lernhub einspeicherbar oder einstellbar sind.

9. Schutzeinrichtung nach einem der Ansprüche 1 bis 5, **dadurch gekennzeichnet, dass** zur Deaktivierung eine zeitsteuereinrichtung mit der Deaktivierungsvorrichtung (30) verbunden ist.

10. Schutzeinrichtung nach einem der vorhergehenden Ansprüche, **dadurch gekennzeichnet, dass** die Lichtschranken (19 bis 22) wenigstens eine, vorzugsweise eine einzige, ein paralleles Lichtbündel erzeugende Lichtquelle besitzen, die an einem Endbereich der Lichtschrankenstrecke angeordnet ist, und dass am zweiten gegenüberliegenden Endbereich eine Lochblende mit einem dahinter liegenden Umlenkspiegel angeordnet ist, wobei die durch die Lochblende zurück reflektierten Lichtstrahlen am ersten Endbereich auf eine Lichtempfängeranordnung gelenkt werden, vorzugsweise mittels eines halbdurchlässigen Umlenkspiegels in der Lichtschrankenstrecke.

## Claims

1. Safety device for machines, such as bending presses, cutting machines, stamping machines or the like, wherein a first machine component (10) performs operating movements against a second machine component (11), with a photoelectric barrier arrangement (19-22), in particular a laser light barrier arrangement, mounted on the first machine component (10) by means of a retaining device (15-18), which comprises at least two photoelectric barriers (19, 20) arranged one behind the other in the operating path of the first machine component (10), their light beams extending at right angles to the direction of operating movement (A) and having a safety clearance from said machine component (10) in the direction of the other machine component (11) in an adjustable safety position, and with a locking device stopping the operating movement at any interruption of the light beam, **characterised by** a deactivating device (30) for the sequential deactivation of the photoelectric barriers (19-22) before an interruption by the component (14) to be machined of by the second machine component (11).

2. Safety device according to claim 1, **characterised in that** at least one further photoelectric barrier arrangement comprising at least one photoelectric barrier (21, 22) is laterally offset relative to the photoelectric barrier arrangement (19, 20) on the first machine component (10), the deactivating device (30) being designed for the deactivation of the at least one photoelectric barrier (21, 22) of the further photoelectric barrier arrangement.

3. Safety device according to claim 2, **characterised in that** additional switch-off means are provided for the deactivation of this at least one further photoelectric barrier arrangement (21, 22).

4. Safety device according to claim 3, **characterised in that** automatic switch-on means are provided for the activation of the deactivated further photoelectric barrier arrangement (21, 22), which can in particular be triggered by the opening movement of the first machine component (10) or by limit switches.

5. Safety device according to any of the preceding claims, **characterised in that** in use the safety clearance in the direction of the operating movement between the first machine component (10) and the adjacent photoelectric barrier (20) and between the photoelectric barriers (19, 20) of the first photoelectric barrier arrangement is less than the diameter of the smallest body part, in particular a finger, of the operator which can be inserted between the machine components (10, 11).

6. Safety device according to any of the preceding claims, **characterised in that** a cam control with limit switches is connected to the deactivating device (30) for deactivation.

7. Safety device according to any of claims 1 to 5, **characterised in that** a position sensing system (33) is connected to the deactivating device (30) for deactivation.

8. Safety device according to claim 7, **characterised in that** a learning device is assigned to the position sensing system (33), whereby the deactivation positions can be stored and set by interrupting at least the lowest photoelectric barrier (19) in a learning stroke.

9. Safety device according to any of claims 1 to 5, **characterised in that** a timing device is connected to the deactivating device (30) for deactivation.

10. Safety device according to any of the preceding claims, **characterised in that** the photoelectric barriers (19 to 22) have at least one, preferably a single, light source generating a parallel beam of light, which is located in an end area of the photoelectric barrier track, and **in that** a circular aperture with a deflecting mirror arranged behind is located in the second, opposite end area, the light beams reflected through the circular aperture being directed onto a light detector arrangement, preferably by means of a semitransparent deflecting mirror in the photoelectric barrier track.

## Revendications

1. Dispositif de protection pour des machines, telles que des presses à plier, des machines à découper, des machines à poinçonner ou similaires, dans lesquelles une première partie de la machine (10) effectue des mouvements de travail vers une deuxième partie de la machine (11), comportant un agencement de barrières photoélectriques (19-22), en particulier un agencement de barrières photoélectriques par laser, qui est monté sur la première partie de la machine (10) au moyen d'un dispositif de fixation (15-18) et qui comporte au moins deux barrières photoélectriques (19, 20), qui sont disposées l'une derrière l'autre dans la trajectoire du mouvement de travail de la première partie de la machine (10) et dont les faisceaux lumineux sont perpendiculaires à la direction du mouvement de travail (A) et forment, dans une position de sécurité réglable, des distances de sécurité entre ladite partie de la machine (10) et l'autre partie de la machine (11), et comportant un dispositif de blocage arrêtant le mouvement de travail en cas de coupure du faisceau lumineux, **caractérisé par** un dispositif de désactivation (30) destiné à désactiver les barrières photoélectriques (19-22) l'une après l'autre, avant chaque coupure du faisceau par la pièce à façonner (14) ou par la deuxième partie de la machine (11).

2. Dispositif de protection selon la revendication 1, **caractérisé en ce qu'**au moins un agencement supplémentaire de barrières photoélectriques, formé par au moins une barrière photoélectrique (21, 22), est monté en étant décalé latéralement par rapport au premier agencement de barrières photoélectriques (19, 20) monté sur la première partie de la machine (10), le dispositif de désactivation (30) étant conçu pour désactiver de manière correspondante ladite au moins une barrière photoélectrique (21, 22) de l'agencement supplémentaire de barrières photoélectriques.

3. Dispositif de protection selon la revendication 2, **caractérisé en ce qu'**il est prévu des moyens de déconnexion supplémentaires pour la désactivation dudit au moins un agencement supplémentaire de barrières photoélectriques (21, 22).

4. Dispositif de protection selon la revendication 3, **caractérisé en ce qu'**il est prévu des moyens de connexion automatiques pour l'activation de l'agencement supplémentaire de barrières photoélectriques (21, 22) désactivé, lesquels peuvent être déclenchés par le mouvement d'ouverture de la première partie de la machine (10) ou par des interrupteurs de fin de course.

5. Dispositif de protection selon l'une quelconque des revendications précédentes, **caractérisé en ce qu'**en cours d'utilisation, la distance de sécurité dans la direction du mouvement de travail, entre la première partie de la machine (10) et la barrière photoélectrique (20) contiguë, ainsi qu'entre les barrières photoélectriques (19, 20)elles-mêmes dudit au moins du premier agencement de barrières photoélectriques, est inférieure au diamètre de la plus petite partie du corps d'une personne de service, en particulier un doigt, qui peut bouger entre les parties de la machine (10, 11).

6. Dispositif de protection selon l'une quelconque des revendications précédentes, **caractérisé en ce que**, pour la désactivation, une commande à cames avec des interrupteurs de fin de course est reliée au dispositif de désactivation (30).

7. Dispositif de protection selon l'une quelconque des revendications 1 à 5, **caractérisé en ce que**, pour la désactivation, un système de mesure du déplacement (33) est relié au dispositif de désactivation (30).

8. Dispositif de protection selon la revendication 7, **caractérisé en ce qu'**au système de mesure du déplacement (33) est associé un dispositif adaptatif, qui, au moment d'une course autodidactique, permet de mémoriser ou de régler les positions de désactivation dues à la coupure d'au moins du faisceau de la barrière photoélectrique inférieure (19).

9. Dispositif de protection selon l'une quelconque des revendications 1 à 5, **caractérisé en ce que**, pour la désactivation, un dispositif de temporisation est relié au dispositif de désactivation (30).

10. Dispositif de protection selon l'une quelconque des revendications précédentes, **caractérisé en ce que** les barrières photoélectriques (19 à 22) possèdent au moins une, de préférence une seule, source lumineuse, générant un faisceau lumineux parallèle et située dans une zone d'extrémité de la trajectoire de la barrière photoélectrique et **en ce qu'**un sténopé, avec un miroir de déviation situé derrière celui-ci, est disposé dans la deuxième zone d'extrémité située en face, les rayons lumineux réfléchis en arrière à travers le sténopé étant guidés vers un système récepteur de la lumière disposé dans la première zone d'extrémité, de préférence au moyen d'un miroir de déviation semi-transparent dans la trajectoire de la barrière photoélectrique.
